# EUROPEAN PATENT APPLICATION

(11) **EP 4 733 897 A1**
(43) Date of publication of application: **29.04.2026**
(21) Application number: 24306791.5
(22) Date of filing: 24.10.2024
(51) Int. Cl.: G06F 3/01

(54) **METHOD AND APPARATUS FOR MAPPING HAPTIC AND AFFECTIVE DATA**

(71) Applicant: InterDigital CE Patent Holdings, SAS, 75017 Paris (FR)
(72) Inventor: GALVANE, Quentin, 35235 THORIGNE-FOUILLARD (FR); GLEMAREC, Yann, 35000 RENNES (FR); LECUYER, Gurvan, 35000 RENNES (FR)
(74) Representative: Vossius & Partner Patentanwälte Rechtsanwälte mbB

(57) **Abstract**

A haptics decoding method according to an example embodiment includes obtaining a file representing a haptic experience. The file includes at least a first affective model data structure identifying an affective model. The file further includes at least a first haptic effect data structure including a first physical description of a first haptic effect. The first haptic effect data structure further includes a first affective response data structure defining a first affective response according to the identified affective model. A rendered haptic effect is provided to a user according to the first haptic effect data structure.

## Description

### BACKGROUND

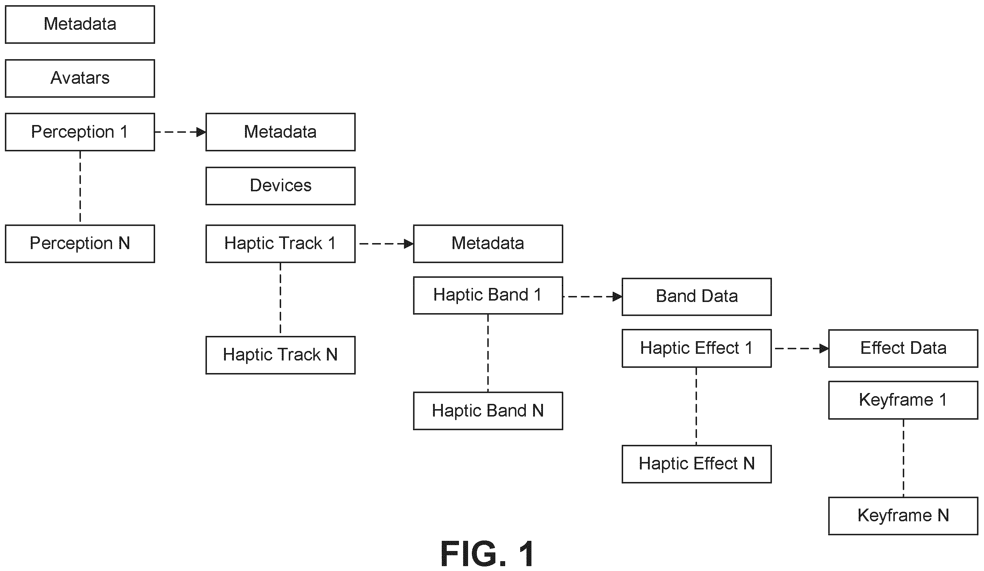

The present disclosure is related to such technologies as haptics formats, MPEG standards, tactile internet, and data compression. With the on-going MPEG standardization process on the coded representation of haptics, a new haptic coding format is being defined. The proposed data structure format has a hierarchical organization as illustrated in FIG. 1.

The format first contains some high-level metadata information regarding the overall haptic experience defined in the file. It then provides a list of avatars (i.e., body representation) later referenced in the file to specify the desired location of haptic stimuli on the body. Table 1 provides a list of properties associated with a haptic experience.

**Table 1.**

| **Property** | **Description** |
|---|---|
| **version** | Year of the edition and amendment of ISO/IEC 23090-31 that this file conforms to, in the following format: XXXX or XXXX-Y, where XXXX is the year of publication and Y is the amendment number, if any. |
| **profile** | Name of the profile used to generate the encoded stream. |
| **level** | Number of the level used to generate the encoded stream. |
| **date** | Creation date of this haptic experience. |
| **description** | A user description of this haptic experience. |
| **timescale** | Number of ticks per second. |
| **avatars** | List of avatars defining body representations used in the haptic experience. |
| **perceptions** | List of perceptions describing a haptic signal. |

The haptic data itself is then described through a list of perceptions. These perceptions correspond to haptic signals associated with specific perception modalities (e.g. vibration, force, position, velocity, temperature, and the like).

A perception contains a list of tracks where the data is decomposed in frequency bands.

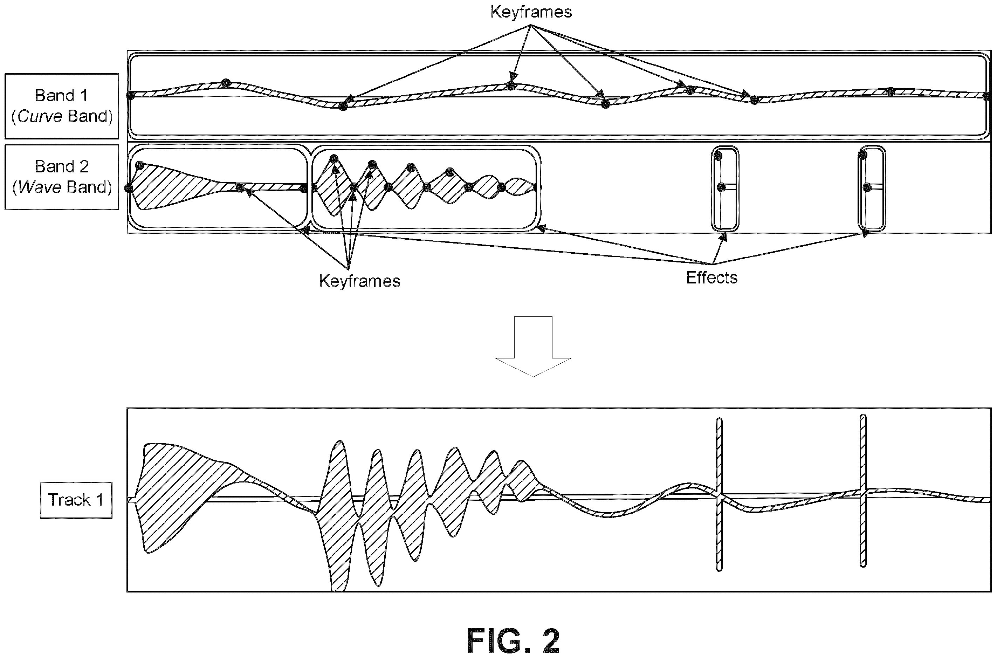

Each band defines part of the signal in a given frequency range. The band itself is described with a list of haptic effects, each defining the haptic signal for a given time duration. The haptic signal in a track can then be reconstructed by combining the data in the different bands. FIG. 2 illustrates how a haptic signal can be decomposed in two frequency bands. By adding the high and low frequency bands, the original signal can be reconstructed.

FIG. 2 illustrates a haptic signal composed of two frequency bands.

The MPEG standard proposes four types of haptic bands: transient bands, curve bands, vectorial bands and wavelet bands. Each band is composed of a series of "effects". The data contained in the effects is interpreted differently for different types of haptic bands and encoding modalities. For a transient band, each effect stores a set of keyframes defining a position, an amplitude, and a frequency. A keyframe represents a transient event. For a curve band, each effect stores a set of keyframes defining a position and an amplitude. The keyframes represent the control points of the curve. The type of interpolation function (cubic or linear) used to generate the band is specified in the metadata of the band. For vectorial bands, the effect stores a set of keyframes defining a position, an amplitude and a frequency. For wavelet bands, the effect stores the contents of one wavelet block binary stream.

The list of properties defining a haptic effect is provided in Table 1. The signal of an effect is defined through a list of keyframes or a wavelet stream depending on the band type as well as the position (temporal or spatial) and potentially a phase and the waveform of the base signal. Additional semantic information may also be specified through the semantic keywords. This allows classification of the signal. A default semantic structure is provided in the standard, but a custom structure can also be used. The default semantic structure proposed in the standard is described in Table 2.

**Table 2: Haptic effect properties.**

| **Property** | **Description** |
|---|---|
| **Id** | Unique ID of the effect. This property is used for effects defined at the perception level in the library and for reference effects. For reference effects, this property corresponds to the ID of the library effect being referenced. The ID is unique among all effect IDs in this haptic experience. |
| **Effect type** | Type of haptic effect. Possible values are: |
| | - Basis: Effect containing signal data defined through a set of keyframes. |
| | - Composite: Effect composed of a set of other effects defined in the composition property. This type of effect does not directly contain keyframes. |
| | - Reference: Effect referencing an effect in the library. This type of effect is used at the band level to reference effects defined at the perception level in the effect library using a unique ID. |
| **Semantic keywords** | Semantic keywords of the haptic effect. It is an optional field that may be added to an effect. |
| **Position** | Indicates the temporal or spatial position of the effect. The value 0 corresponds to the starting position of the experience. The default unit for temporal haptic feedback will be milliseconds while it will be millimetres for |
| | spatial haptic feedback. Temporal or spatial is defined by the perceptionModality. |
| **Phase** | Indicates the phase of the effect in radian in the range [0,2π]. This value is used only for vectorial wave bands and is ignored in effects stored inside a band of a different type. |
| **Base signal** | This property is only used for vectorial wave bands. It defines the type of waveform signal to be used by the synthesizer. Possible values are: |
| | - Sine |
| | - Square |
| | - Triangle |
| | - Sawtooth up |
| | - Sawtooth down |
| **composition** | This property can only be used with composite effects. It contains a sub-list of effects. |
| **keyframes** | List of keyframes. The keyframes list is only used for basis effects. |
| **Wavelet stream** | Encoded wavelet stream. |

As seen in Table 2, semantic keywords for a haptic effect may be used. Table 3 provides some examples of two-layer semantic keywords.

**Table 3: Two-layer semantic keywords.**

| **Laye**r **1** | **Layer 2** |
|---|---|
| | Undefined (default) |
| | Click |
| | Double click |
| | Success |
| | Error |
| **UX** | Alarm |
| | Confirmation |
| | Wrong |
| | Ring |
| | Message |
| | Undefined (default) |
| | Jumping |
| | Fall |
| | Crawl |
| | Swim |
| **Avatar** | Collision |
| | Grab |
| | Touch |
| | Swip |
| | Footstep |
| **Special effect** | Undefined (default) |
| | Washout |
| | Noise |
| | Undefined (default) |
| | Blade |
| | Hit |
| | Hand-thrown |
| | Elastic propulsion |
| | Pneumatic |
| | Handguns |
| | Rifles |
| **Weapons & Combat** | Shotgun |
| | Gun |
| | Machinegun |
| | Taser |
| | Electric shock |
| | Mines |
| | Missile |
| | Grenade |
| | Blast |
| | Undefined (default) |
| | Wind low |
| | Heat |
| | Cold |
| | Rain |
| | Waterfall |
| **Ambient** | Water drop |
| | Electric buzz |
| | Ignition |
| | Cracks |
| | Earthquake |
| | Sparks |
| | Thunderbolt |
| **Texture** | Undefined (default) |
| | Rock |
| | Gravel |
| | Sand |
| | Wood |
| | Metal |
| | Plastic |
| | Undefined (default) |
| | Engine |
| | Doors |
| | Brake |
| | Mechanical Contraption |
| **Vehicles** | Drift |
| | Road friction |
| | Brake |
| | Road bump |
| | Tires |
| | Air friction |
| **Music** | Undefined (default) |
| | Hard material |
| | Bouncy material |
| | Plucking |
| | Bowing |
| | Striking |
| | Brass instruments |
| | Woodwind instruments |

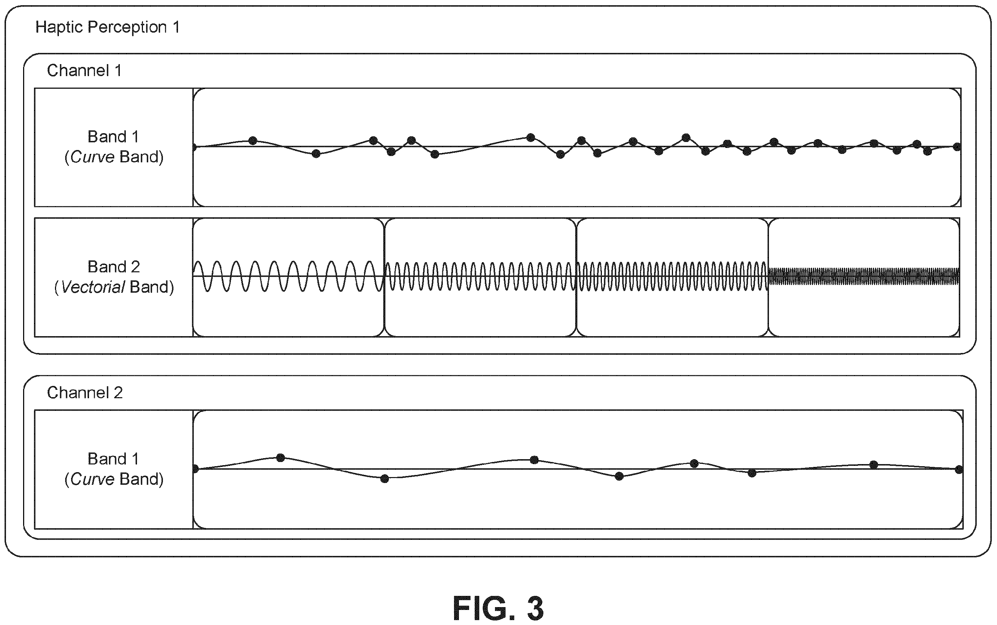

FIG. 3 illustrates an example of haptic data containing a single haptic perception with two channels. The first channel contains a curve band with a single effect and a vectorial band with 4 effects. The second channel contains a single curve band.

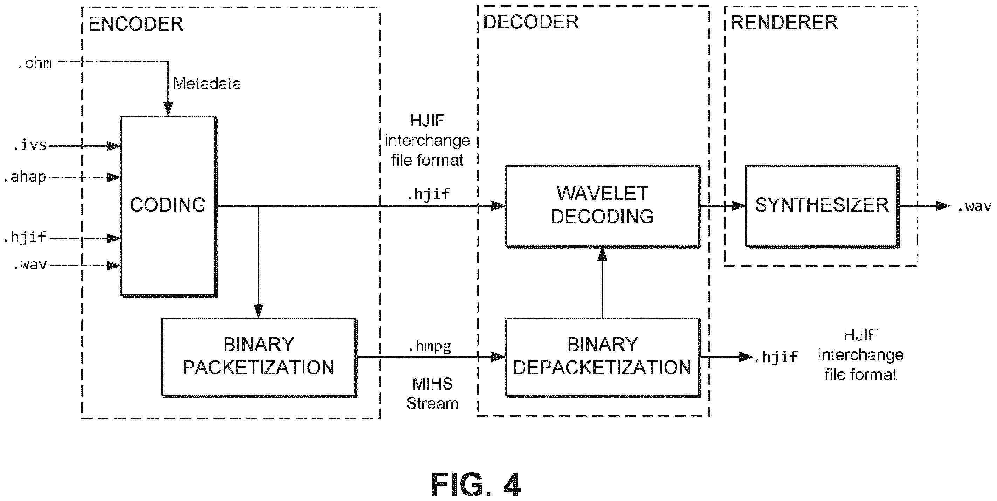

Two complementary formats based on this shared data model are defined in the MPEG standard specifications: an interchange format (.hjif), and a packetized compressed binary format for streaming that can also be stored in a binary file (.hmpg). The HJIF format is a human-readable format based on JSON and is not optimized for memory usage. It can easily be parsed and manually edited, which makes it work well as an interchange format, especially when designing or creating content. For distribution purposes, the .hjif data can be compressed and packetized into a more memory efficient binary .hmpg bitstream. This compression is lossy, with different parameters impacting the encoding depth of amplitudes and frequencies composing the bitstream. The compressed and packetized data can be directly distributed as a MPEG-I haptic stream (MIHS). FIG. 4 illustrates the haptic codec architecture proposed by MPEG with the two proposed formats.

### SUMMARY

Briefly stated, a method according to some embodiments comprises: obtaining a file representing a haptic experience, the file including at least a first affective model data structure identifying an affective model, the file further including at least a first haptic effect data structure including a first physical description of a first haptic effect, wherein the first haptic effect data structure further includes a first affective response data structure defining a first affective response according to the identified affective model; and providing a rendered haptic effect to a user according to the first haptic effect data structure.

An apparatus according to some embodiments comprises one or more processors configured to perform at least: obtaining a file representing a haptic experience, the file including at least a first affective model data structure identifying an affective model, the file further including at least a first haptic effect data structure including a first physical description of a first haptic effect, wherein the first haptic effect data structure further includes a first affective response data structure defining a first affective response according to the identified affective model; and providing a rendered haptic effect to a user according to the first haptic effect data structure.

In some embodiments, providing the rendered haptic effect comprises rendering the first haptic effect according to the first physical description.

In some embodiments, providing the rendered haptic effect comprises rendering a second haptic effect different from the first haptic effect, the second haptic effect being associated with the first affective response. In some such embodiments, the second haptic effect is rendered based on a second physical description, and wherein the second physical description is not provided in the file.

Some embodiments further include selecting, from a library of haptic effects, a second physical description of a second haptic effect associated with the first affective response; wherein providing the rendered haptic effect comprises rendering the second haptic effect according to the second physical description.

In some embodiments, the first affective model data structure includes a first model name and information identifying a first set of parameters, and the first affective response data structure identifies the first model name and provides values for the parameters in the first set. In some such embodiments, at least one of the parameters is a continuous parameter, and the value for the continuous parameter is a numerical value. In some embodiments, at least one of the parameters is a categorical parameter, and the value for the categorical parameter is information identifying a category.

A method according to some embodiments comprises: selecting a desired first affective response; selecting a first haptic effect based on the desired first affective response; and in a file representing a haptic experience, encoding at least a first affective model data structure identifying an affective model and encoding at least a first haptic effect data structure including a first physical description of the first haptic effect; wherein encoding the first haptic effect data structure includes encoding a first affective response data structure defining the first affective response according to the identified affective model.

An apparatus according to some embodiments comprises one or more processors configured to perform at least: selecting a desired first affective response; selecting a first haptic effect based on the desired first affective response; and, in a file representing a haptic experience, encoding at least a first affective model data structure identifying an affective model and encoding at least a first haptic effect data structure including a first physical description of the first haptic effect; wherein encoding the first haptic effect data structure includes encoding a first affective response data structure defining the first affective response according to the identified affective model.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 schematically illustrates the hierarchical structure of haptics data.
FIG. 2 illustrates an example of a haptic signal composed of two frequency bands.
FIG. 3 illustrates an example of haptic data containing a single haptic perception with two channels.
FIG. 4 illustrates the haptic codec architecture proposed by MPEG with two proposed formats. Example embodiments as described herein may be implemented using such a codec.
FIG. 5 is a flow diagram illustrating a haptics decoding method according to some embodiments.
FIG. 6 is a flow diagram illustrating a haptics encoding method according to some embodiments.
FIG. 7 is a functional block diagram of an example of a system in which various aspects and embodiments are implemented.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

While haptic effects may simply be associated with timed punctual events or result from an interaction with a virtual scene (e.g., an explosion, a shotgun, car engine in a video game), haptics can also be used to convey or reinforce emotions for a given experience. Whether it is used in games, movies, or other immersive experiences, haptics play a considerable role in the emotional impact of the experience on the audience. The relation between haptics and emotions may be referred to as affective haptics. This topic relates to the influence of the stimulation of the human haptic sensory system on the emotional state of a human.

There are multiple emotion models with various approaches to represent emotion perception. These models emerge from cognitive psychology research and can be categorized into three groups: categorical, continuous and appraisal based. Categorical models bind an emotion with a category, for instance P. Ekman and his colleagues gather a collection of facial expressions that can elicit basic emotions such as fear, anger, amusement, or pride, as described for example in Ekman, P., Friesen, W. V., & Tomkins, S. S. (1971), "Facial Affect Scoring Technique: A First Validity Study," Semiotica, 3, 37-58. Whereas continuous models used continuous dimensions to create a parameter space on which they map different emotions, e.g., Russel et al. in the circumplex of affect used valence and arousal to represent a set of emotions in a 2D space, described for example in Russell, James A, "A circumplex model of affect," Journal of personality and social psychology 39.6 (1980): 1161. Such models can even include further dimensions like pleasure, arousal, dominance, expectation or intensity. Finally, research for a complete description of affect and emotion perception relies on appraisal theories that state the importance of the evaluation and the interpretation of an event to explain an individual's emotion. Thus, it can become a hybrid model including continuous dimensions and categorical variables such as the interaction context.

When an artist designs a haptic enabled experience, he may use haptic signals with a specific intent. Typically, haptic designers with experience in affective haptics may rely on haptic to elicit or amplify the emotional response of the user (surprise, fear, happiness, etc.). When crafting a haptic effect aimed at producing a given affective response, the designer usually relies on his experience as well as trial and error experimentations.

The information on the desired affective response is not conventionally used, stored or transmitted in haptic data. As a result, the work that was conducted to produce a given effect and associate it to a specific emotional response is carried out repeatedly by haptic designers. Additionally, haptic designers with no experience in the field of affective haptics may not be able to conduct this type of work.

Moreover, the affective response of a user to haptic stimuli is not guaranteed, part of this response remains subjective. Designers' artistic vision may be altered by user's preferences and emotional state or subjective environmental aspects. Conventional solutions do not allow for adjustment of these external factors.

Another issue resides in the lack of generic affective model. As described below, there exist different models of affect, each capturing different notions and defining a different set of parameters.

The present disclosure describes new methods and apparatus to allow haptic designers to enrich their haptic experience by providing information on the desired affective response of the designed haptic effect. Example embodiments allow for the use of existing models of affects or for the design of custom models.

Example embodiments can be used to build haptic libraries containing not only semantic information as shown in Table 2, but also metadata related to the desired emotional response associated to the effect. In such embodiments, the affective information associated to a haptic effect can be leveraged in different ways. It can be used during the authoring process by making available the affective information associated with the haptic effect from an effect library. This may allow any haptic designer, with or without experience in the field of affective haptics, to craft better experiences, taking into account the desired affective response of the audience.

Example embodiments can also be used at the rendering stage to adjust the haptic experience based on user preferences or state. For instance, multiple haptic emotional libraries with both semantic and affective information may be provided as alternatives to a given experience. The user can then choose a different library that could be used to supersede the initial haptic effects of the experience.

Some embodiments make use of a data structure capable of representing various different models of affect. An example parametric model allows the specification of existing models of affect or the creation of new models by defining a custom parameter space.

A data structure used in some embodiments is represented in Table 4. The representation defines the name of the model, provides a description of the model, indicates the number of dimensions of the model and details the lists of both the continuous parameters and the categorical parameters. Table 5 provides an example of a description of a continuous parameter, and Table 6 provides an example of a description of a categorical parameter.

**Table 4: Description of parameters of an example affective model representation.**

| **Property** | **Description** |
|---|---|
| **model** | Affective model used to describe the desired emotional state of the spectator. Possible values include "Circumplex", "PAD", "Appraisal", "Custom" |
| **description** | Description of the model |
| **dimensions** | Number of parameters used to define the model |
| **continuous_parameters** | List of numerical parameters. Values are in the range [-1,1] |
| **categorical_parameters** | List of parameters |

**Table 5: Description of a continuous parameter of an affective model.**

| **Property** | **Description** |
|---|---|
| **name** | Name of the parameter. |
| **description** | Description of the parameter. |

**Table 6: Description of a categorical parameter of an affective model.**

| **Property** | **Description** |
|---|---|
| **name** | Name of the parameter. |
| **range** | Number of possible values. It indicates the number of categories associated to the parameter. |
| **description** | Description of the parameter. The description should define all the possible values of the parameter. |

Example embodiments allows for the definition of a custom model or for the use of different existing models of affect, such as the circumplex model or the PAD model (pleasure arousal dominance).

In the context of the MPEG haptic standard, an example affective model representation as described herein may be used in the data structure to define one or several affective models that may then be referenced to associate haptic data to affective data. Data as described herein may be added at the experience level as shown in Table 7 through a list of affective model definitions. The same data may alternatively be provided as a single element instead of a list or added at lower level of the data structure (e.g. at the perception level or the channel level).

**Table 7: Haptic experience properties including a list of affective models.**

| **Property** | **Description** |
|---|---|
| **version** | Year of the edition and amendment of ISO/IEC 23090-31 that this file conforms to, in the following format: XXXX or XXXX-Y, where XXXX is the year of publication and Y is the amendment number, if any. |
| **profile** | Name of the profile used to generate the encoded stream. |
| **level** | Number of the level used to generate the encoded stream. |
| **date** | Creation date of this haptic experience. |
| **description** | A user description of this haptic experience. |
| **timescale** | Number of ticks per second. |
| **avatars** | List of avatars defining body representations used in the haptic experience. |
| **affective models** | List of affective models used in the haptic experience. |
| **perceptions** | List of perceptions describing a haptic signal. |

Some embodiments include data structures and methods for storing and transmitting the emotional/affective metadata associated to haptic data. Table 8 details a metadata description according to some embodiments. The metadata information first contains a reference to the model. This can be done using the name of the model if it was detailed before (using our generic affective model representation for instance) or a URN for example. Another solution could consist in referencing the model through an id for instance (using an integer instead of a string). The metadata then defines the values associated to each of the continuous and categorical parameters.

**Table 8: Effective metadata description.**

| **Property** | **Description** |
|---|---|
| **model** | Affective model used to describe the desired emotional state of the spectator. Possible values include "Circumplex", "PAD", "Appraisal", "Custom" |
| **Continuous parameters** | List of numerical parameters. Values are in the range [-1,1] |
| **Categorical parameters** | List of parameters |

This data structure allows for the definition of the desired emotional response associated with haptic data. In the context of the MPEG Haptic standard, this representation of affective data may be used in the data structure to attach affective information to haptic data.

Such a data structure may be added at the effect level as shown in Table 9. The information may also be added at other levels of the data structure to attach affective information to a channel or a band.

**Table 9: Haptic effect properties including affective data.**

| **Property** | **Description** |
|---|---|
| **Id** | Unique ID of the effect. This property is required for effects defined at the perception level in the library and for reference effects. For reference effects, this property corresponds to the ID of the library effect being referenced. The ID is unique among all effect IDs in this haptic experience. |
| **Effect type** | Type of haptic effect. Possible values are: |
| | - Basis: Effect containing signal data defined through a set of keyframes. |
| | - Composite: Effect composed of a set of other effects defined in the composition property. This type of effect does not directly contain keyframes. |
| | - Reference: Effect referencing an effect in the library. This type of effect is used at the band level to reference effects defined at the perception level in the effect library using a unique ID. |
| **Semantic keywords** | Semantic keywords of the haptic effect. It is an optional field that may be added to an effect. |
| **Position** | Indicates the temporal or spatial position of the effect. The value 0 corresponds to the starting position of the experience. The default unit for temporal haptic feedback will be milliseconds while it will be millimetres for spatial haptic feedback. Temporal or spatial is defined by the perceptionModality. |
| **Phase** | Indicates the phase of the effect in radian in the range [0,2π]. This value is used only for vectorial wave bands and is ignored in effects stored inside a band of a different type. |
| **Base signal** | This property is only used for vectorial wave bands. It defines the type of waveform signal to be used by the synthesizer. Possible values are: |
| | - Sine |
| | - Square |
| | - Triangle |
| | - Sawtooth up |
| | - Sawtooth down |
| **composition** | This property can only be used with composite effects. It contains a sub-list of effects. |
| **keyframes** | List of keyframes. The keyframes list is only used for basis effects. |
| **Wavelet stream** | Encoded wavelet stream. |
| **Affect data** | This property describes the desired affective response associated to the haptic effect. |

Example embodiments may be implemented in different ways. For example, data structures as described herein may be added to the HJIF format or it can be encoded in the MIHS binary compressed data. Here for the sake illustration, details are provided of an example implementation using the HJIF readable format.

Table 10 provides a description of an example embodiment in which the definition of the affective models used in the experience is included as a list in the MPEG_haptics object of the HJIF format.

**Table 10: Description of the MPEG_haptics object including the affective model information.**

| **Property** | **Type** | **Default** | **Description** | **Required** |
|---|---|---|---|---|
| **version** | string | N/A | Year of the edition and amendment of ISO/IEC 23090-31 that this file conforms to, in the following format: XXXX or XXXX-Y, where XXXX is the year of publication and Y is the amendment number, if any. For this document, the value shall be "2023". | Yes |
| **profile** | string | N/A | Name of the profile used to generate the encoded stream according to the profile@level definition. | Yes |
| **level** | integer | N/A | Number of the level used to generate the encoded stream according to the profile@level definition. The value shall be equal to or greater than zero. | Yes |
| **date** | string | N/A | Indicates the creation date of this haptic experience. The date format shall conform to ISO 8601 series. | Yes |
| **description** | string | N/A | The user-defined description of this haptic experience. | Yes |
| **timescale** | integer | 1000 | Number of ticks per second. The value shall be greater than zero. | No |
| **avata rs** | array <MPEG_haptics. avatar> | N/A | Provides the List of MPEG_haptics.avatar. | Yes |
| **affective _models** | array <MPEG_Haptics. affectModel> | N/A | List of affective models used in the haptic experience. | Yes |
| **perceptions** | array <MPEG_haptics. perception> | N/A | Provides the List of MPEG_haptics.perception. The array shall contain at least one element. | Yes |
| **syncs** | array <MPEG_haptics. sync> | N/A | Provides the List of MPEG_haptics.sync. | No |

In this and all other tables of the present disclosure, an indication that a particular syntax element is "required" indicates that it is required for the syntax of the specific embodiment being described. It does not indicate that the syntax element is required for all embodiments; there may be other embodiments in which that syntax element is not required.

An example of data associated with an affective model according to an example embodiment is detailed in Table 11. The properties of the continuous and categorical parameters associated with a model are detailed respectively in Table 12 and Table 13.

**Table 11: Description of the MPEG_haptics.affectModel object.**

| **Property** | **Type** | **Default** | **Description** |
|---|---|---|---|
| **model** | string | N/A | Affective model used to describe the desired emotional state of the spectator. Possible values include "Circumplex", "PAD", "Appraisal", "Custom" |
| **description** | string | N/A | Description of the model |
| **dimensions** | number | N/A | Number of parameters used to define the model |
| **continuous_parameters** | array<continuous_parameter> | N/A | List of numerical parameters. Values are in the range [-1,1] |
| **categorical_parameters** | array<categorical parameters> | N/A | List of parameters |

**Table 12: Description of the MPEG_haptics.continuousParameter.**

| **Property** | **Type** | **Default** | **Description** |
|---|---|---|---|
| **name** | String | N/A | Name of the parameter. |
| **description** | String | N/A | Description of the parameter. |

**Table 13: Description of the MPEG_haptics.categoricalParameter.**

| **Property** | **Type** | **Default** | **Description** |
|---|---|---|---|
| **name** | string | N/A | Name of the parameter. |
| **range** | number | N/A | Number of possible values. It indicates the number of categories associated to the parameter. |
| **description** | string | N/A | Description of the parameter. The description should define all the possible values of the parameter. |

Table 14 describes the structure of an example MPEG_haptics.effect object that includes affective data. The affective data is associated to a haptic effect. The description of affective data specifying the affective model and the values of the continuous and categorical parameters is detailed in Table 15.

**Table 14: Description of the MPEG_haptics.effect including affective data.**

| **Property** | **Type** | **Default** | **Description** | **Required** |
|---|---|---|---|---|
| **id** | integer | N/A | ID of an effect. For any effect from the effect library and any "Reference" effect, the value shall be defined and be equal to or greater than zero. For all other effects the property shall not be defined. For any non-"Reference" effect from the effect library , the value shall be unique in the perception. | Conditional |
| **effect_type** | enum<string> | N/A | Indicates the type of haptic effect. Effect-type value equals one of: "Basis", "Composite" and "Reference". | Yes |
| **semantic _keywords** | string | N/A | Semantic keywords included with the effect. | No |
| **position** | integer | N/A | Indicates the temporal or spatial position of the effect according to the perception modalities. In the case of temporal, position/timescale is the temporal position in seconds. The value shall be equal to or greater than zero.ln a band where band_type = "WaveletWave", this property shall only exist for the first effect (and no other). For any other band type, the property is required. | Conditional |
| **phase** | number | 0 | Phase of the effect for Transient and Vectorial bands. The value should be in the range [0,2π]. | No |
| **base_signal** | enum<string> | Sine | Indicates the type of the waveform signal for transient and vectorial wave bands. Possible values are: | No |
| | | | - "Sine" | |
| | | | - "Square" | |
| | | | - "Triangle" | |
| | | | - "SawToothUp" | |
| | | | - "SawToothDown" | |
| **composition** | array<MPEG_ haptics.effect> | N/A | This attribute can only be used with composite effects. It contains a list of effects. This type of effect does not directly contain keyframes. | No |
| **keyframes** | array<MPEG_ haptics.keyframe> | N/A | List of MPEG_haptics.keyframes. This property is required for basis effects. If the keyframes array is empty, the effect does not contain haptic data. This property shall not exist when band_type="WaveletWave". | No |
| **wavelet _stream** | string | N/A | Base64 encoding with most significant bit first (conformant to RFC 4648) of the encoded wavelet stream. This property shall exist only when band_type="WaveletWave". | Conditional |
| **affect_data** | MPEG_haptics. affectData | N/A | This property describes the desired affective response associated to the haptic effect. | Yes |

**Table 15: Description of the MPEG_haptics.affectData.**

| **Property** | **Type** | **Default** | **Description** | **Required** |
|---|---|---|---|---|
| **model** | string | N/A | Affective model used to describe the desired emotional state of the spectator. Possible values include "Circumplex", "PAD", "Appraisal", "Custom" | Yes |
| **continuous_parameters** | array<number> | N/A | List of numerical parameters. Values are in the range [-1,1] | Yes |
| **categorical_parameters** | array<integer> | N/A | List of parameters | Yes |

The following is an example of haptic file containing a single effect. The circumplex model is defined in the metadata of the experience and then used to provide the affective data associated with the haptic effect. In this example, the haptic effect in the file is associated with an arousal value of 0.7 and a valence value of 0.7.

```
 {
   "version":"2023",
   "profile":"Main",
   "level":1,
   "date":"Mon Sep 16 15:15:33 2024\n",
   "description":"Example effect",
   "timescale":1000,
   "avatars":[
   ],
   "affective_models":[
      {
          "model":"Circumplex",
          "description":"Affective model based on Valence and Arousal",
          "dimensions":2,
          "continuous_parameters":[
             {
                "name":"Valence",
                "description":"Valence parameter of the circumplex model"
             },
             {
                "name":"Arousal",
                "description":"Arousal parameter of the circumplex model"
             }
          ],
          "categorical_parameters":[
          ]
      }
   ],
   "perceptions":[
      {
          "id":0,
          "avatar_id":0,
          "description":"Vibration effect",
          "perception_modality":"Vibrotactile",
          "unit_exponent":-3,
          "perception_unit_exponent":0,
          "reference_devices":[
          ],
          "effect_library":[
          ],
          "channels":[
             {
                "id":0,
                "description":"Channel 0",
                "gain":1.0,
                "mixing_coefficient":1,
                "body_part_mask":131072,
                "bands":[
                   {
                       "band_type":"VectorialWave",
                       "lower_frequency_limit":0,
                       "upper_frequency_limit":1000,
                       "effects":[
                          {
                             "effect_type":"Basis",
                             "position":0,
                             "phase":0.0,
                             "base_signal":"Sine",
                             "keyframes":[
                                 {
                                    "relative_position":0,
                                    "amplitude_modulation":0.1,
                                    "frequency_modulation":200
                                 },
                                 {
                                    "relative_position":1000,
                                    "amplitude_modulation":0.2,
                                    "frequency_modulation":200
                                 }
                             ],
                             "affect_data":{
                                 "model":"Circumplex",
                                 "continuous_parameters":[0.7, 0.7],
                                 "categorical_parameters":[]
                             }
                          }
                       ]
                    }
                ]
             }
          ]
      }
   ],
   "syncs":[
      {
          "timestamp":0,
          "timescale":1000
      }
   ]
   }
```

A decoding method according to some embodiments comprises obtaining (502) a file representing a haptic experience. The file includes at least a first affective model data structure (obtained at 504) identifying an affective model. The affective model data structure may include, for example, a set of properties as shown in Table 4, above. In some embodiments, one or more affective model data structures are provided, e.g. in a list such as the list named affective_models in the example above.

The file further includes at least a first haptic effect data structure (obtained at 506), which may be, for example, a MPEG_haptics.effect data structure as represented in Table 14. The first haptic effect data structure includes a first physical description of a first haptic effect (obtained at 508). The physical description may include, for example, information indicating a temporal or spatial position of the effect, a phase of the effect, a base signal type, composition information, key frame information, and/or wavelet stream information, among other types of physical description information.

The first haptic effect data structure further includes a first affective response data structure (510) defining a first affective response according to the identified affective model. The first affective response data structure may be, for example, an MPEG_haptics.affectData data structure as represented in Table 15 above. As shown in Tables 11-13 and further described above, the first affective model data structure may include a first model name and information identifying a first set of parameters. In such a case, as shown in Table 15, the first affective response data structure may identify the first model name and provide values for the parameters in the first set.

A haptic effect is provided to a user (512) according to the first haptic effect data structure, e.g. by a renderer as illustrated in FIG. 4. In some cases, the rendered haptic effect is provided by rendering the first haptic effect according to the first physical description.

In other cases, the rendered haptic effect is provided by rendering a second haptic effect different from the first haptic effect, where the second haptic effect is associated with the first affective response. The second haptic effect may be rendered based on a second physical description that is not provided in the file. For example, the second physical description may be one of several haptic effects stored in a library of haptic effects associated with different affective responses. The library of stored haptic effects may be user configurable. In some cases, a haptic effect from the library may be used every time a stored effect is present that corresponds to the indicated affective response. The effect from the library may be provided as an alternative to or in addition to the corresponding haptic effect described in the haptic effect data structure from the file.

In some embodiments, a determination of whether a haptic effect in a library corresponds to the indicated affective response is made based on a comparison of continuous and categorical parameters of the affective response. In some embodiments, an affective response associated with a stored haptic effect in a library is considered to correspond to the affective response indicated in the file only if the categorical parameters of the two responses are identical and only if the continuous parameters are different by no more than a threshold difference. Other stricter or looser criteria for determining such a correspondence may alternatively be used. For example, some criteria may be ignored (e.g. in response to user configuration) for the purpose of determining a correspondence. The threshold in determining differences may be different for different parameters. The difference may be determined based on a combination of parameters, for example as a sum of absolute differences or a sum of square differences, among other possibilities.

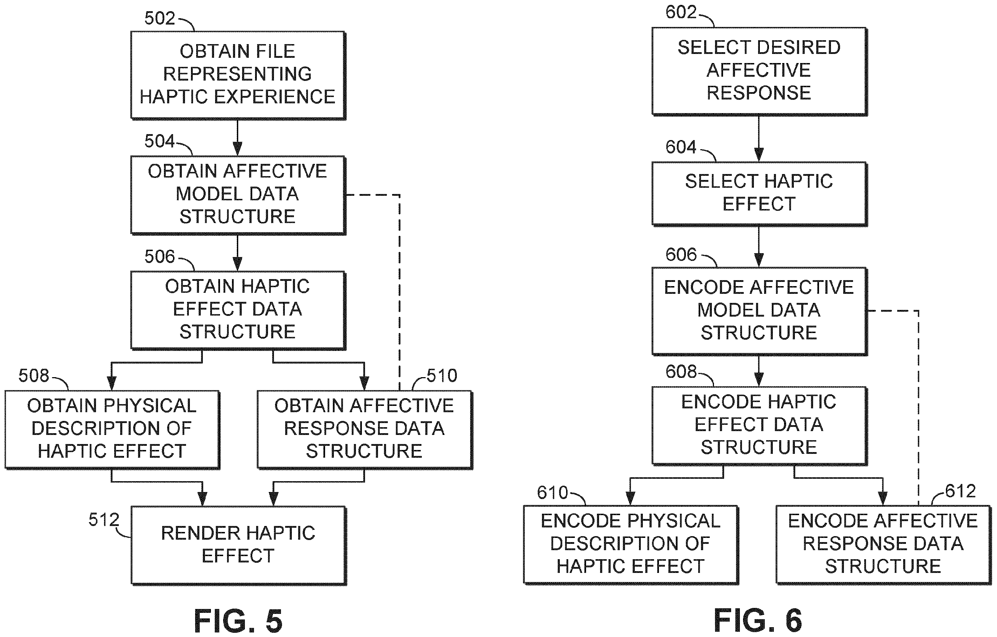

FIG. 6 illustrates an example haptics encoding method performed in some embodiments. A selection is obtained (602) of a desired first affective response. For example, the selection may be obtained from a user by haptics encoding software. A first haptic effect is selected (604) based on the desired first affective response. For example, the haptic effect may be selected from a library of effects having a corresponding affective response, as described with respect to FIG. 5, above. At least a first affective model data structure identifying an affective model is encoded (606) in a file representing the haptic experience. At least a first haptic effect data structure is also encoded (608) in the file. Encoding the first haptic effect data structure includes encoding (610) a first physical description of the first haptic effect and encoding (612) a first affective response data structure defining the first affective response according to the identified affective model.

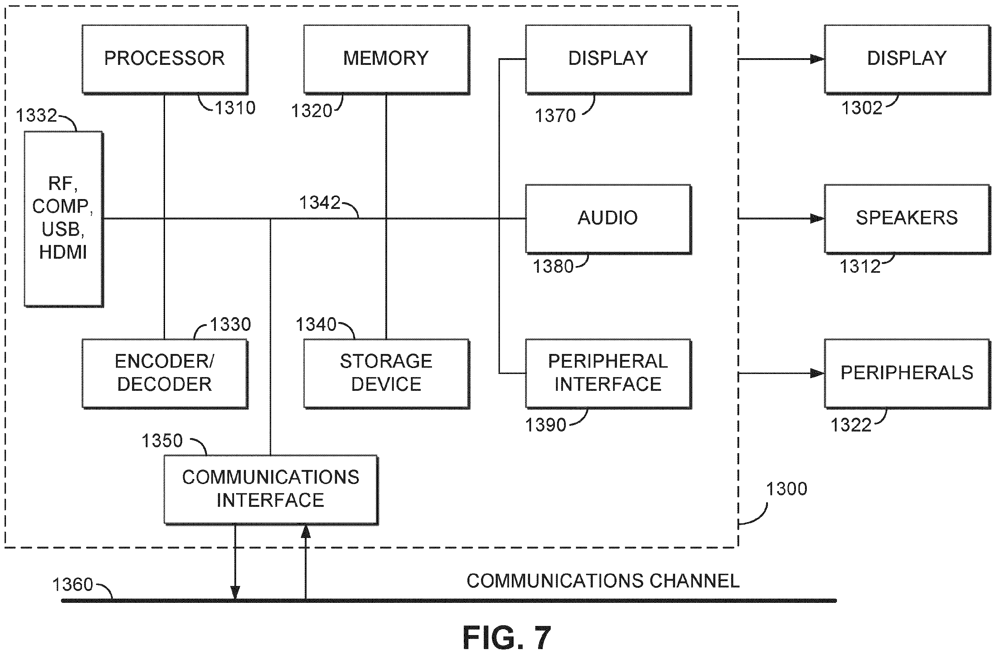

Some embodiments may be implemented on a system of one or more processors as illustrated in FIG. 7. FIG. 7 is a block diagram of an example of a system in which various aspects and embodiments are implemented. System 1300 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multicore architecture, as non-limiting examples.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
obtaining a file representing a haptic experience, the file including at least a first affective model data structure identifying an affective model, the file further including at least a first haptic effect data structure including a first physical description of a first haptic effect, wherein the first haptic effect data structure further includes a first affective response data structure defining a first affective response according to the identified affective model; and
providing a rendered haptic effect to a user according to the first haptic effect data structure.

2. An apparatus comprising one or more processors configured to perform at least:
obtaining a file representing a haptic experience, the file including at least a first affective model data structure identifying an affective model, the file further including at least a first haptic effect data structure including a first physical description of a first haptic effect, wherein the first haptic effect data structure further includes a first affective response data structure defining a first affective response according to the identified affective model; and
providing a rendered haptic effect to a user according to the first haptic effect data structure.

3. The method of claim 1 or the apparatus of claim 2, wherein providing the rendered haptic effect comprises rendering the first haptic effect according to the first physical description.

4. The method of claim 1 or the apparatus of claim 2, wherein providing the rendered haptic effect comprises rendering a second haptic effect different from the first haptic effect, the second haptic effect being associated with the first affective response.

5. The method of claim 4 as it depends from claim 1, or the apparatus of claim 4 as it depends from claim 2, wherein the second haptic effect is rendered based on a second physical description, and wherein the second physical description is not provided in the file.

6. The method of claim 1 or the apparatus of claim 2, further comprising:
selecting, from a library of haptic effects, a second physical description of a second haptic effect associated with the first affective response;
wherein providing the rendered haptic effect comprises rendering the second haptic effect according to the second physical description.

7. The method of claim 1 or the apparatus of claim 2, wherein the first affective model data structure includes a first model name and information identifying a first set of parameters, and wherein the first affective response data structure identifies the first model name and provides values for the parameters in the first set.

8. The method of claim 7 as it depends from claim 1, or the apparatus of claim 7 as it depends from claim 2, wherein at least one of the parameters is a continuous parameter, and wherein the value for the continuous parameter is a numerical value.

9. The method of claim 7 as it depends from claim 1, or the apparatus of claim 7 as it depends from claim 2, wherein at least one of the parameters is a categorical parameter, and wherein the value for the categorical parameter is information identifying a category.

10. A method comprising:
obtaining a selection of a desired first affective response;
selecting a first haptic effect based on the desired first affective response; and
in a file representing a haptic experience, encoding at least a first affective model data structure identifying an affective model and encoding at least a first haptic effect data structure including a first physical description of the first haptic effect;
wherein encoding the first haptic effect data structure includes encoding a first affective response data structure defining the first affective response according to the identified affective model.

11. An apparatus comprising one or more processors configured to perform at least:
obtaining a selection of a desired first affective response;
selecting a first haptic effect based on the desired first affective response; and
in a file representing a haptic experience, encoding at least a first affective model data structure identifying an affective model and encoding at least a first haptic effect data structure including a first physical description of the first haptic effect;
wherein encoding the first haptic effect data structure includes encoding a first affective response data structure defining the first affective response according to the identified affective model.

12. The method of claim 10 or the apparatus of claim 11, wherein the first affective model data structure includes a first model name and information identifying a first set of parameters, and wherein the first affective response data structure identifies the first model name and provides values for the parameters in the first set.

13. The method of claim 12 as it depends from claim 10, or the apparatus of claim 12 as it depends from claim 11, wherein at least one of the parameters is a continuous parameter, and wherein the value for the continuous parameter is a numerical value.

14. The method of claim 12 as it depends from claim 10, or the apparatus of claim 12 as it depends from claim 11, wherein at least one of the parameters is a categorical parameter, and wherein the value for the categorical parameter is information identifying a category.

15. A computer-readable medium including instructions for causing one or more processors to perform the method of claim 1, or any of claims 3-9 as they depend from claim 1, or the method of claim 10, or any of claims 11-14 as they depend from claim 10.
